# EUROPEAN PATENT APPLICATION

(11) **EP 4 800 371 A1**
(43) Date of publication of application: **02.09.2026**
(21) Application number: 26156269.8
(22) Date of filing: 04.02.2026
(51) Int. Cl.: G01N 15/0205, G01N 15/1429, G01N 15/14

(54) **OPTICAL PARTICULATE SENSOR WITH MULTI-LINE LASER USAGE FOR INCREASED MEASUREMENT ACCURACY**

(30) Priority: 27.02.2025 US 202519065604
(71) Applicant: Honeywell International s.r.o, 148 00 Chodov (CZ)
(72) Inventor: BADIN, Pavel, Charlotte, 28202 (US); DRAZAN, Viktor, Charlotte, 28202 (US); GAO, Kaizhong, Charlotte, 28202 (US); MARK, Robert, Charlotte, 28202 (US); OKLESTEK, Jan, Charlotte, 28202 (US)
(74) Representative: Haseltine Lake Kempner LLP

(57) **Abstract**

A system comprises a particulate sensor unit comprising a light source that directs at least two light beams to an interrogation region where portions of the light beams overlap each other. An optical detector captures scattered or reflected light from an aerosol particle in the interrogation region that passes through the light beams. A processor performs a particle sizing method for aerosol particles in the interrogation region that detects an optical response of scattered or reflected light. When the detected optical response has two peaks, the method comprises determining a first optical response value for a particle located in a vicinity of a center of one of the light beams; determining a second optical response value for the particle when located in between the light beams; identifying a ratio between the first optical response value and the second optical response value; and based on the identified ratio, estimating particle size.

## Description

### STATEMENT REGARDING FEDERALLY SPONSORED RESEARCH OR DEVELOPMENT

This invention was made with Government support under S0176492/ 101102008 awarded by CAJU. The Government has certain rights in the invention.

### BACKGROUND

High concentrations of supercooled water droplets or ice crystals within the atmosphere cause ice accretion on aircraft frames or within aircraft engines, resulting in multiple issues, such as increased drag, reduced lift, reduced thrust, and other issues. In addition, volcanic ash is hard and abrasive, and high concentrations of volcanic ash within the atmosphere cause significant wear to propellers and turbo-compressor blades, resulting in engine flameout, and other issues.

In conventional particle sensors, discrimination of water droplets and ice crystals can be based on light depolarization signal analysis since water droplets are spherical and ice crystals are aspherical. In addition, the discrimination of water droplets and volcanic ash, sand, or dust can be based on depolarization signal analysis since water droplets are spherical, and volcanic ash, sand, and dust particles are aspherical.

There is a need in the aircraft industry for sensors that can monitor icing conditions as well as volcanic ash, sand, and dust conditions in the atmosphere. Existing minimum operational performance specification (MOPS) standards require sensor measurement accuracy to be below 30 % in estimation of liquid water content and ice water content. However, current sensor measurement accuracy does not meet the target performance. The measurement accuracy for volcanic ash, sand, and dust content is not sufficient to meet user requirements and needs to be improved to support engine maintenance, and flight path optimization in vicinity of volcanic ash events.

### SUMMARY

A system comprises a particulate sensor unit for a vehicle, the particulate sensor unit comprising at least one light source configured to direct at least two light beams to an interrogation region outside of the vehicle and where portions of the light beams overlap each other. An optical detector is configured to capture scattered or reflected light from an aerosol particle in the interrogation region that passes through the at least two light beams, and a processor in operative communication with the optical detector. The processor hosts a program module with instructions, executable by the processor, to perform a particle sizing method for aerosol particles in the interrogation region. The method comprises detecting an optical response of scattered or reflected light from the interrogation region; wherein when the detected optical response has two peaks, the method comprises determining a first optical response value for a particle when located in a vicinity of a center of one of the light beams; determining a second optical response value for the particle when located in between the light beams; identifying a ratio value between the first optical response value for the particle and the second optical response value for the particle; and based on the identified ratio value, estimating a size of the particle.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a block diagram of a system for enhanced particle sensing for use in a vehicle, according to one embodiment;
Figures 2A-2B are simulated schematic representations showing optical response dependency of ice crystal on its orientation with respect to a sensor;
Figure 2C is a simulated graphical representation showing optical response dependency of ice crystal on its orientation with respect to a sensor;
Figures 3A-3F are schematic diagrams showing examples of aerosol particle optical response types;
Figures 4A-4E are simulated graphical representations of water droplet optical response and ice crystal optical response, illustrating multiple optical response types of aerosol particles;
Figures 5A-5C are simulated representations of two laser beams having Gaussian beam profiles, in which ice crystals pass through the Gaussian beam profiles along an airflow direction;
Figure 6 is a graphical representation of aerosol optical response within a single line laser beam profile;
Figures 7A and 7B are graphical representations of aerosol optical response within multi-line laser beam profiles;
Figure 8 is a graph representing a two Gaussian beams scenario, showing that a ratio between the optical response peak amplitude and the optical response minimum between two amplitude peaks (MIN/MAX ratio), can be used to estimate size of ice crystals;
Figure 9 is a graph representing a two Gaussian beams scenario, showing that a MIN/MAX ratio can be used to estimate size of water droplets;
Figures 10A-10C illustrate histogram distributions of optical response peak amplitude and MIN/MAX ratio values for different types and shapes of aerosol particles;
Figure 11 is a simulated representation of a three light beam pattern, where one of the light beams is not symmetrical;
Figure 12 is a simulated optical response of ice crystals, where the ice crystals get larger than the light beam width and have only a single optical response type;
Figure 13 is a simulated optical response of water droplets, where the water droplets gets larger than the light beam width;
Figures 14 is a simulated optical response of ice crystal which is larger than a single light beam width and which has multiple types of optical response types;
Figure 15 is a flow diagram of a method for particle sizing, according to one implementation, which can be employed in the system of Figure 1; and
Figure 16 illustrates a system for generating a two-line optical signal beam pattern, according to an example embodiment.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

Systems and methods for implementing optical particulate sensors with multi-line laser usage, providing for increased measurement accuracy, are described herein.

In general, the present systems employ at least two light beams located close to each other, where portions of the light beams overlap each other. As an aerosol particle passes through the light beams, it reflects or scatters light in a direction to the sensor receiving optics, an optical response is measured by the sensor, and the measured signal is normalized. The light beams may have multiple types of profiles, however in the text below, each light beam is assumed to have a Gaussian profile.

If particle size is smaller than the distance of two consecutive Gaussian peak centers from each other, the optical response will contain two peaks having approximately the same amplitude and one minimum between the peaks having approximately the same value. A ratio between the optical response peak amplitude ("MAX") and optical response minimum between two amplitude peaks ("MIN") is determined. Particle size is estimated based on the value of the identified ratio.

If the particle size is similar or larger than the distance of two consecutive Gaussian peak centers from each other, the optical response might contain different number of peaks than two and the amplitude of the peaks might vary. A complex peak shape analysis method is performed in this case, with particle size estimated based on similarity with a reference peak shape and duration.

If a particle crosses two light beams and the measured optical response has two peaks, where each of the peaks has approximately the same amplitude, then knowing the sampling period, the airspeed at the sensor interrogation volume can be calculated.

The present methods are more resistant to differences in particle optical responsivity, compared to particle size estimation using optical response amplitude only. For example, for water droplets the optical response is dependent on particle size as the droplets are spherical. For ice crystals and volcanic ash, which are aspherical particles, the optical response is dependent on particle size, shape, orientation in space, surface optical properties, and material optical properties. A higher measurement accuracy is achieved using the present methods for such aspherical particles. The present methods can be combined with other particle sizing methods to reach even higher measurement accuracy.

As the present methods detect a particle size using differential measurements, this reduces particle size measurement dependency on optical responsivity of the particle, as well as reducing dependency of particle size measurement on optical window transmissivity. As such, this significantly reduces measurement error caused by disturbed optical window transparency (e.g., dirt, abrasion, aging effect on the window material, insects smashed on sensor window, etc.). The present methods can result in significantly higher measurement accuracy for ice crystals, as well as volcanic ash / sand / dust particles. The methods are expected to work optimally if the particle shape is not highly asymmetrical, which is likely to be true for a majority of ash particles and complex ice crystals.

Further details of various embodiments are described hereafter and with reference to the drawings.

### Optical Particulate Sensor Design

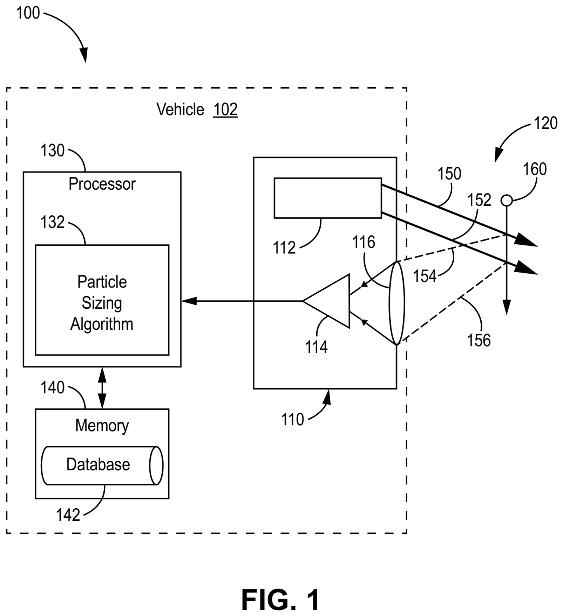

Figure 1 illustrates a system 100 for enhanced particle sensing, for use in a vehicle 102 such as an aircraft, according to one embodiment. The system 100 includes a particulate sensor unit 110 in vehicle 102, the particulate sensor unit 110 comprising at least one light source 112, such as a laser device, configured to direct at least two light beams to an interrogation region 120 outside of vehicle 102. The system 100 also includes an optical detector 114, and a processor 130 in operative communication with optical detector 114. The optical detector 114 is configured to capture scattered or reflected light from an aerosol particle in interrogation region 120 that passes through the at least two light beams. The particulate sensor unit 110 also includes a set of receive optics 116 configured to provide at least one receive channel.

In one embodiment, light source 112 and receive optics 116 can be implemented in an optical transceiver, which is part of a light detection and ranging (LiDAR) device. The receive optics 116 couples received light to optical detector 114, which can include one or more photodetectors, such as avalanche photodiodes. In one embodiment, light source 112 is configured to create a multi-line laser pattern, where each line is parallel to each other line. In another embodiment, light source 112 is configured to create multiple light beams, where each light beam has a flat-top profile in one axis and Gaussian profile in a perpendicular axis.

The processor 130 hosts a program module with instructions, executable by processor 130, to run a particle sizing algorithm 132 for aerosol particles in interrogation region 120, based on measured data from optical detector 114. At least one memory unit 140 is in operative communication with processor 130. A database 142 can be stored in memory unit 140. The database 142 can store calibration Look-Up Tables, parameters describing shape of reference optical responses, etc.

In an example operation, light source 112 transmits two light beams 150, 152 into interrogation region 120 outside of vehicle 102 and where a portion of light beams 150, 152 overlap each other. The receive optics 116 collects scattered or reflected portions 154, 156 of light beams 150, 152 from at least one aerosol particle 160 in interrogation region 120. The optical detector 114 receives the collected scattered or reflected light portions 154,156 through the receive channel provided by receive optics 116. The optical detector 114 converts the light from scattered or reflected portions 154, 156 to an electrical signal that is proportional to the intensity of the light. This allows optical detector 114 to measure an optical response as a function of time to produce measurement data, which is sent to processor 130 for use by particle sizing algorithm 132 to produce particle size data, where particle sizing algorithm 132 may use data stored in database 142. The particle size data can be output from processor 130 to other vehicle systems, such as a vehicle computer, for use in further vehicle data processing.

As described in further detail hereafter, particle sizing algorithm 132 is performed based on detecting an optical response of the collected scattered or reflected portions 154, 156 of light beams 150, 152. In one embodiment, when the light source 112 transmits two light beams, the detected optical response has two peaks of approximately the same amplitude, and there is a single minimum between the two peaks, the particle sizing algorithm 132 determines a first optical response value for a particle when located in a vicinity of the center of one of the light beams; determines a second optical response value for the particle when located in a vicinity of between the two light beams; identifies a ratio value between the first optical response value for the particle and the second optical response value for the particle; and based on the identified ratio value, estimates a size of the particle.

In one example when the light source transmits two light beams and the detected optical response has two peaks of approximately the same amplitude and one minimum is detected between the two peaks, the particle size estimation can be performed using a calibration look-up table.

In another example implementation, when the light source transmits two light beams and the detected optical response has a number of peaks different than two or the amplitude of each of the two peaks differs significantly, a particle size analysis method can be performed using an optical response peak shape analysis, where an amount of scattered or reflected light from a particle is analyzed in time; and a size of the particle is determined based on the shape of the optical response signal, duration of the optical response signal and amplitude of each of the optical response peaks.

### Aerosol Optical Response

Generic information: When equivalent diameter of non-spherical particles is mentioned in the text below, it can be understood as the equivalent diameter of a water droplet that has the same volume as the non-spherical particle. When a Gaussian beam width of a certain value is mentioned in the text below, the Gaussian beam width is considered to be defined as having a 1/e² diameter.

In a prior particle sizing method, in which particle sizing uses optical response peak amplitude, the size of aerosol particles is determined based on the peak amplitude of scattered or reflected optical signals, and is highly dependent on particle optical responsivity. A calibration look-up table is used to convert the measured optical response peak amplitude to particle size.

For example, water droplets in the atmosphere have spherical or almost spherical shape up to diameter of about 2,000 microns, water droplet surface is smooth, and water droplet material composition is known. Spatial orientation of a water droplet does not have any impact on optical response as the particle shape is spherical. Therefore, the water droplet optical response is very deterministic, and the prior particle sizing method can be used. However, the optical response of ice crystals or volcanic ash particles is highly dependent on its shape, orientation with respect to the sensor, its surface properties and material properties. Using the prior particle sizing method for ice crystals or volcanic ash particles would result in increased sensor measurement error.

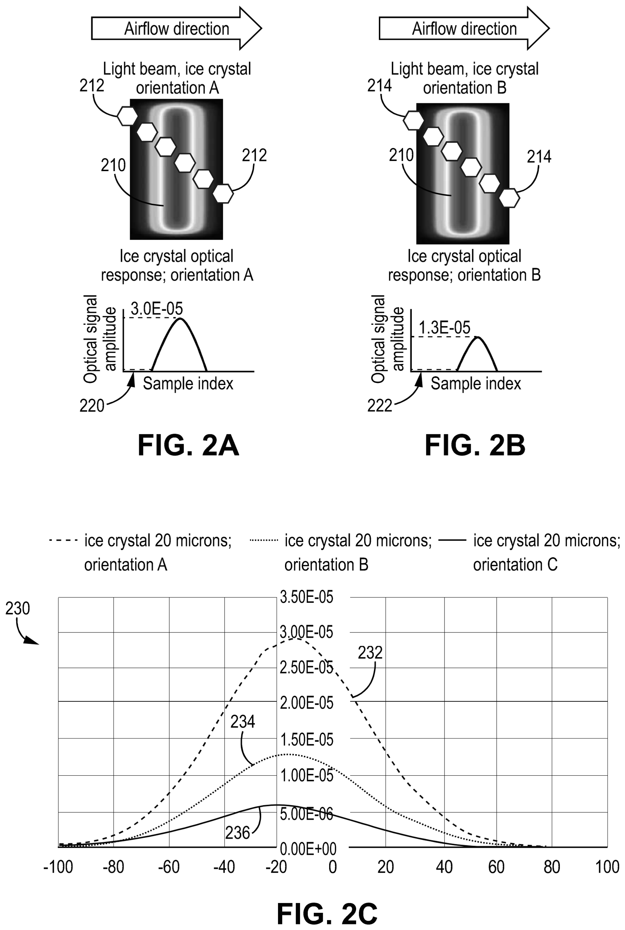

Suppose water droplet of diameter 20 microns is measured by the optical particulate sensor. As the water droplet shape is spherical, its optical response will be the same for any random orientation of the water droplet and the same optical response will be measured by the sensor. Therefore, the sensor will reach high measurement accuracy for water droplet particles. The situation is very different for ice crystals, where the optical response is dependent on particle shape and its orientation with respect to the sensor. Illustration of such a situation is shown in Figures 2A, 2B, and 2C, which are described as follows.

Figures 2A and 2B are example schematic representations of ice crystal optical response, which illustrate that ice crystal optical response is different from water droplet optical response. The example utilizes a light beam 210 which has a Gaussian beam profile and its 1/e² beam diameter is 100 microns.

In the example shown in Figure 2A, an ice crystal 212 (with an orientation A) having a size of 20 microns, passes through light beam 210 and has a peak amplitude of 3.0E-05, as depicted in plot 220. In the example shown in Figure 2B, an ice crystal 214 of the same shape and size as ice crystal 212, only with a different orientation (orientation B) with respect to a sensor, passes through light beam 210 and has a peak amplitude of 1.3E-05, as depicted in plot 222. The particles travel through the laser beams in a horizontal direction, crossing the Gaussian axis perpendicularly to a fat-top axis, with vertical displacement shown to provide for better visibility of the particle position.

Figure 2C is a graph 230 illustrating the optical responses for ice crystals having a size of 20 microns, all having the same size and shape, but with different orientations with respect to the sensor. The vertical axis of the graph 230 is the optical response (AU), and the horizontal axis is the distance of the particle from a Gaussian beam center (microns). As shown, an optical response curve 232 for an ice crystal of orientation A has a higher peak amplitude and longer peak duration than an optical response curve 234 for an ice crystal of orientation B. The ice crystal of orientation B has a higher peak amplitude and longer peak duration than an optical response curve 236 for an ice crystal of orientation C.

Ice crystals and ash / sand / dust particles of the same size and shape can produce optical responses with a different peak amplitude and a different peak duration. This is different from water droplets, where each size of water droplet produces unique values of peak amplitude and peak duration.

Water droplets and ice crystal particles have very low optical signal attenuation within the material; therefore, the atmospheric water droplets and ice crystals can be considered transparent. Volcanic ash particles may have higher optical signal attenuation, allowing the optical signal to travel only tens of microns within the particle without being significantly attenuated. For small volcanic ash particles, the material may be considered transparent or semi-transparent, while large particles may be considered opaque.

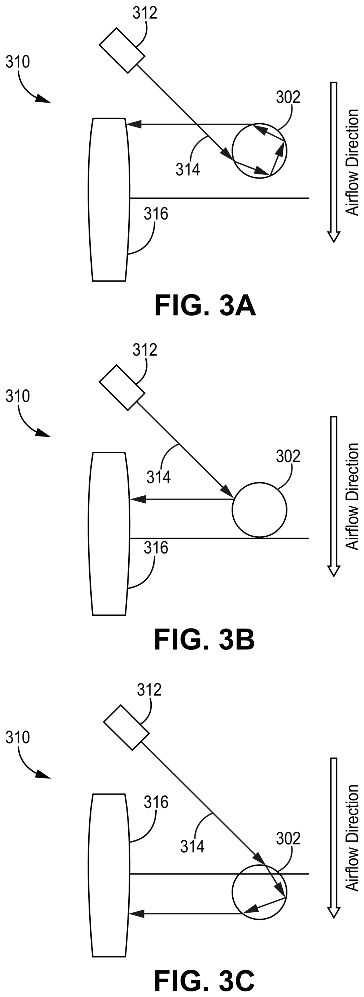

Figures 3A-3F illustrate the optical response of water droplets and hexagonal ice crystals, which have a significantly larger diameter than the light beam Gaussian width. As shown, an aerosol particle is moving from the top to the bottom of the images in an airflow direction.

Figures 3A-3C represent three types of optical responses of a water droplet 302 detected by a particulate sensor 310, which includes a light source 312 that transmits a beam 314, and a set of receiving optics 316. Figure 3A illustrates a secondary rainbow optical response of the water droplet 302, where the optical response is caused by two internal reflections and two refractions from the beam 314. Figure 3B illustrates direct optical signal reflection of the water droplet 302, where the optical response is caused by reflection of the optical signal from the surface of the water droplet 302. Figure 3C illustrates a primary rainbow optical response of the water droplet 302, where the optical response is caused by one internal reflection and two refractions.

The intensity of the three optical responses shown in Figures 3A-3C may differ significantly. For example, the optical response caused by the primary rainbow effect may be higher than the optical response caused by the secondary rainbow effect, and the secondary rainbow effect may be higher than the direct optical signal reflection.

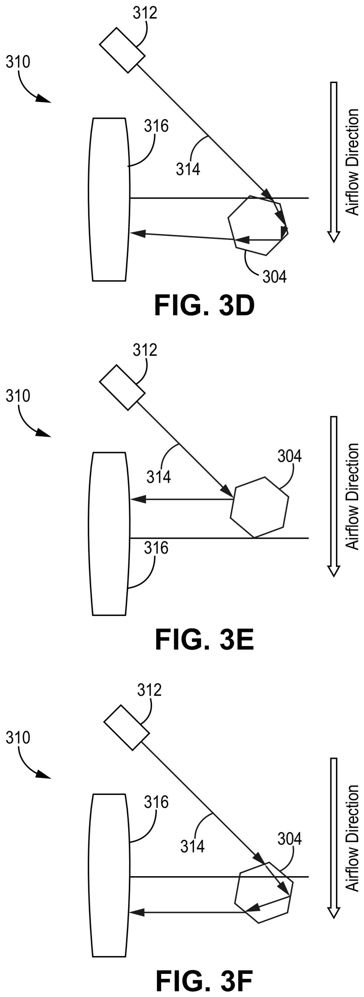

Figures 3D-3F represent three types of optical responses of a hexagonal ice crystal 304 detected by the particulate sensor 310. Figure 3D illustrates the optical response of the ice crystal 304 having a first orientation with respect to the sensor 310. For this scenario, the ice crystal 304 only provides a response in the direction of the receiving optics 316 caused by two reflections and two refractions. For the ice crystal orientation shown in Figure 3D, the ice crystal 304 has only a single type of optical response.

Figures 3E and 3F illustrate the optical response of the ice crystal 304 having a second orientation with respect to the sensor 310. In Figure 3E, the ice crystal 304 provides a first optical response caused by direct reflection of the beam 314. In Figure 3F, the ice crystal 304 provides a second optical response caused by one reflection and two refractions. For the ice crystal orientation shown in Figures 3E and 3F, the ice crystal 304 has two types of optical response.

In general, ice crystals and volcanic ash / sand / dust particles may have multiple types of optical responses and intensity of each optical response type that varies with dependency on particle surface optical properties, material optical properties, shape and orientation with respect to the sensor.

Suppose an optical transmitter generates a light beam having a Gaussian profile, having a defined width, such as a 1/e² width. If the longest diameter of an aerosol particle is shorter than the light beam width, then all the optical signal response types are generated simultaneously, and the measured optical signal response can be considered linearly proportional to the light beam energy density profile.

If the longest diameter of the aerosol particle has a similar size as the light beam width or is larger than the light beam width, the individual optical response types may be generated separately, therefore, the optical response is no longer linearly proportional to the energy density of the light beam profile. A size evaluation method for such particles is described hereafter under the heading *Present Multi-Line Measurement Method for Large Particles.*

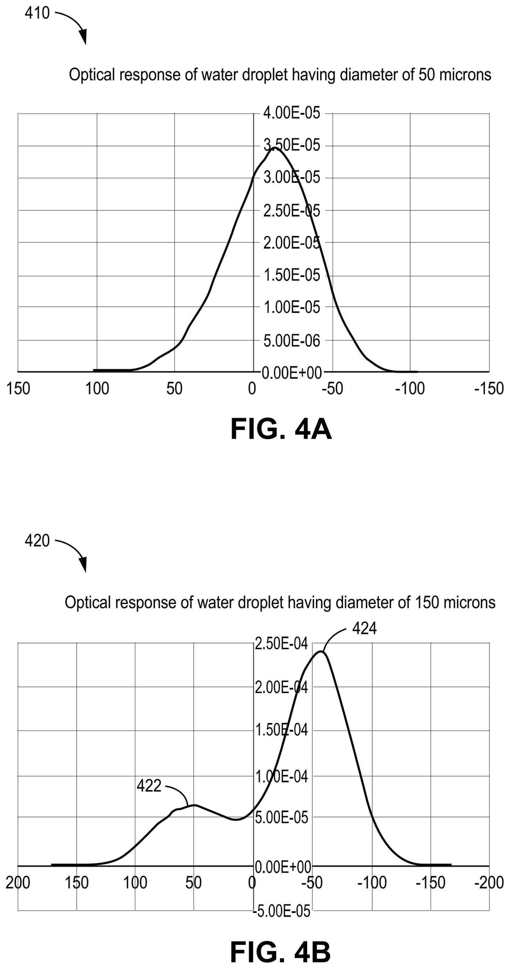

Figures 4A-4C are graphs of the optical response of a water droplet within a light beam having a Gaussian profile and a 1/e² width of 100 microns. The vertical axis in the graphs of Figures 4A-4C is the optical response (AU), and the horizontal axis is the distance of the particle from a Gaussian beam center (microns).

Figure 4A is a graph 410 showing the optical response of a water droplet having a diameter of 50 microns. As the droplet is smaller than the light beam width, all the individual optical response types occur simultaneously, and the response is linearly proportional to energy density of the light beam profile. As the light beam profile is Gaussian, the optical response has a Gaussian profile as well.

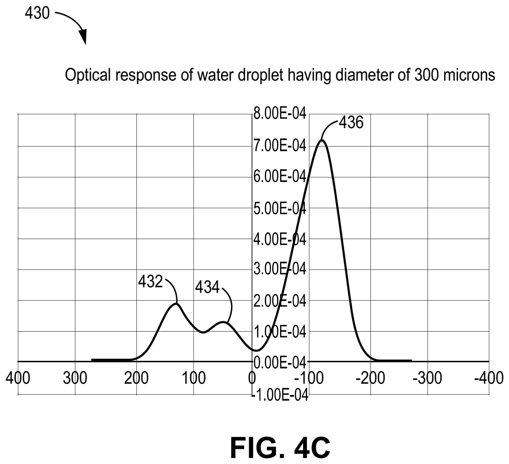

Figure 4B is a graph 420 showing the optical response of a water droplet having a diameter of 150 microns. As the droplet diameter is larger than the light beam 1/e² Gaussian width, the optical response contains two peaks: a first peak 422 is caused by direct reflection and the secondary rainbow effect; a second peak 424 is caused by the primary rainbow effect. Figure 4C is a graph 430 showing the optical response of a water droplet having a diameter of 300 microns. As the droplet size is significantly larger than the light beam 1/e² Gaussian width, the optical response contains three peaks: a first peak 432 is caused by the secondary rainbow effect; a second peak 434 is caused by direct reflection; and a third peak 436 is caused by the primary rainbow effect. The scenarios of Figures 4B and 4C illustrate an optical response that is not linearly proportional to energy density of the light beam profile.

As shown in Figures 4A-4C, increasing the water droplet diameter resulted in a more complex optical response detected by the sensor. Ice crystals and volcanic ash / sand / dust particles may also have multiple types of optical response. If an ice crystal or ash particle largest diameter is shorter than a light beam 1/e² Gaussian width, then the optical response can be considered linearly proportional to energy density of the light beam profile, similar to that shown in Figure 4A.

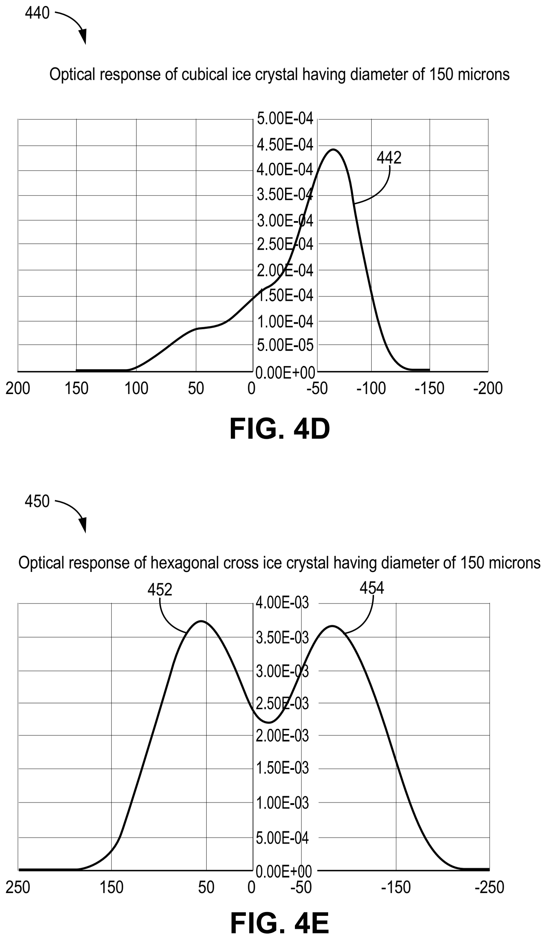

If the ice crystal or ash particle largest diameter has a similar size or larger size than the light beam 1/e² Gaussian width, then the optical response may contain multiple individual responses of various intensities. This is illustrated in the graphs of Figures 4D and 4E, in which the vertical axis is the optical response (AU), and the horizontal axis is the distance of the particle from a Gaussian beam center (microns).

Figure 4D is a graph 440 showing that a cubical shaped ice crystal of equivalent diameter of 150 microns causes an optical response 442 that does not follow a light beam Gaussian profile. Figure 4E is a graph 450 showing that more complex ice crystals can generate a more complex optical response. Here, a hexagonal cross ice crystal produces an optical response having two peaks at 452 and 454. The two peaks are created due to symmetry of the hexagonal cross particle, and the two peaks are generated under a certain set of particle spatial orientations with respect to the sensor.

To summarize, particles having a largest diameter smaller than the light beam width generate an optical response linearly proportional to the light beam energy density. Particles having a largest diameter similar to or larger than the light beam width generate an optical response that may be composed of multiple types of optical responses, and the measured optical signal may not be linearly proportional to energy density of the light beam profile.

### Multi-Line Laser Beams

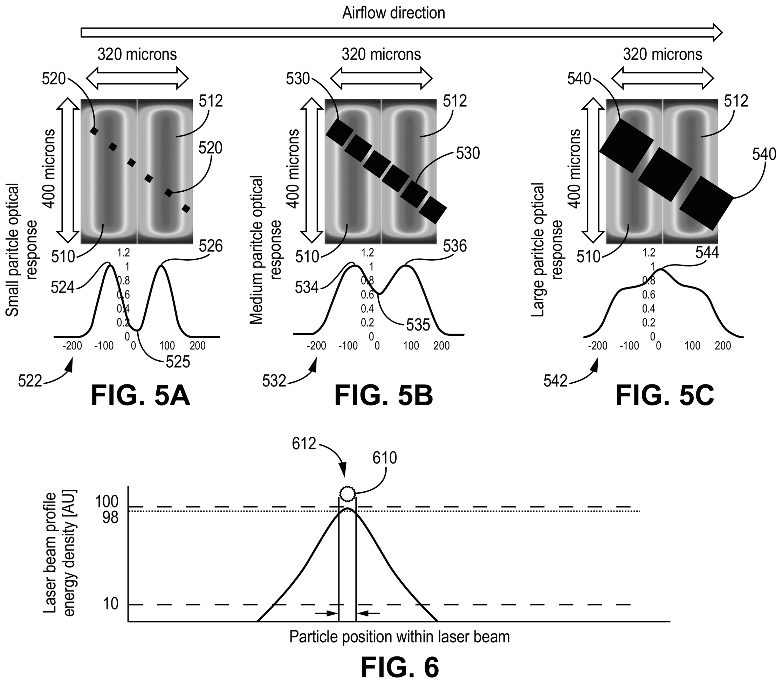

Figures 5A-5C are example schematic representations of multi-line light beams 510 and 512 having a light beam 1/e² Gaussian width of 160 microns. The light beams 510 and 512 are separated from each other at a distance of 160 microns. This configuration can be used in the present method to measure particles of different sizes. In these examples, a simulated optical response of a small, medium, and large aerosol particle travelling through the pair of beams is shown with respect to an airflow direction. The particle optical response is normalized (e.g., maximal value set to 1.0). The simulated particle shape is an ice crystal having a cubical shape and its orientation is selected so it has only a single type of optical response. The particles travel through the laser beams in a horizontal direction, with vertical displacement shown to provide for better visibility of the large particle position.

As shown in Figure 5A, a small particle 520 passes through the light beams 510, 512. For small particles such as the particle 520, if the size of the particle is significantly smaller compared to the light beam Gaussian width, two distinct peaks are visible. This is depicted in a plot 522, in which two distinct peak amplitudes are visible at 524 and 526, and a weak optical response 525 is detected in between the two peaks.

In the example shown in Figure 5B, a medium sized particle 530 passes through the light beams 510 and 512. For medium particles such as the particle 530, as the particle travels between the two beams, the particle reflects or scatters some light from both beams simultaneously, and therefore a stronger optical signal is detected when the particle is between the beams. This is depicted in a plot 532, in which a stronger optical signal is detected at 535, between peak amplitudes at 534 and 536, when the particle 530 is between the light beams 510 and 512.

In the example shown in Figure 5C, a large particle 540 passes through the light beams 510 and 512. For large particles such as the particle 540, as the particle is larger than the distance between the two beams, the particle reflects or scatters most light from both beams simultaneously, and therefore there is a higher peak detected while the particle is between the two beams. This is depicted in a plot 542, in which a higher peak is detected at 544 while the particle is between the light beams 510 and 512.

The strongest optical response of an aerosol particle might not be when the particle center of gravity is within the center of a light beam. The effect is illustrated in Figures 3A, 3B, and 3C, described previously. The light beam peak center horizontal coordinate is 0 microns. In Figure 3A, as the water droplet enters the light beam, the secondary rainbow is detected by the sensor. Next, the water droplet moves with the airflow, which is illustrated in Figure 3B, and the light beam impacts the center of the water droplet. Direct reflection is detected by the sensor 310. Next, the water droplet 302 moves with the airflow, as illustrated in Figure 3C, and the primary rainbow is generated before the water droplet 302 leaves the light beam 314.

For the described sensor setup, the strongest optical response of the water droplet is caused by the primary rainbow and therefore, the strongest optical response occurs when the water droplet center of gravity is not within the light beam peak position. Therefore, the amplitude of optical response might occur when a particle is in the light beam center or in a vicinity of the light beam center. Also, the minimum signal between the two amplitudes might be generated in between the two light beams or in near vicinity of between the two light beam centers.

### Present Multi-line Measurement Method for Small Aerosol Particles

Suppose the light beam has a Gaussian profile and the aerosol particle largest dimension is smaller than the light beam width. The Gaussian width may be defined as 1/e². For such a scenario, the particle size may be considered small compared to the width of the light beam profile and even if the particle has multiple optical responses, those will be generated simultaneously. The optical particulate sensor usually measures data in laminar high-speed airflow, which is stable in the timescale of the particle flying through the measurement volume of the sensor. The rotation speed of the particles is too slow compared to the particle transition time through the measurement volume. Therefore, the particle spatial orientation does not change as the particle passes through sensor measurement volume.

The prior particle sizing method, described previously under the heading *Aerosol Optical Response,* is illustrated in Figure 6. In one example when the light beam profile has a 1/e² Gaussian width of 50 microns, an irregularly shaped aerosol particle 610 is within a beam and measurement is performed at a position 612. The example is simplified to make the explanation clear. The following equation is used to determine the particle optical response: *LBAED * A* * OPR, where *LBAED* is light beam average energy density in which the particle is present, *A* is particle area, and *OPR* is particle optical responsivity. The light beam average energy density changes with particle size: if particle size is very small, its volume is present in a light beam region having almost homogeneous value of energy density. If the particle is large, its volume may be in regions having a different energy density, therefore the light beam average energy density is an average of multiple energy densities in which the particle is present.

As shown in the plot of Figure 6, in a first orientation with respect to the sensor, the light beam average energy density in which the particle is present is 98 [AU]. The particle area is 100 µm² and the particle reflects 0.3% of the optical power in a direction to the sensor receiving optics. The measured amplitude of the optical response will be 98 * 100 * 0.003 = 29.4 [AU*µm²]. In a second orientation with respect to the sensor, the light beam average energy density in which the particle is present is 98 [AU], the particle area is 100 µm² and the particle reflects 0.1% of the optical power in a direction to the sensor receiving optics. The measured amplitude of the optical response will be 98 * 100 * 0.001 = 9.8 [AU*µm²]. If the measured optical signal amplitude is used to determine diameter of the particle, the different size will be attributed to the same particle having different orientations.

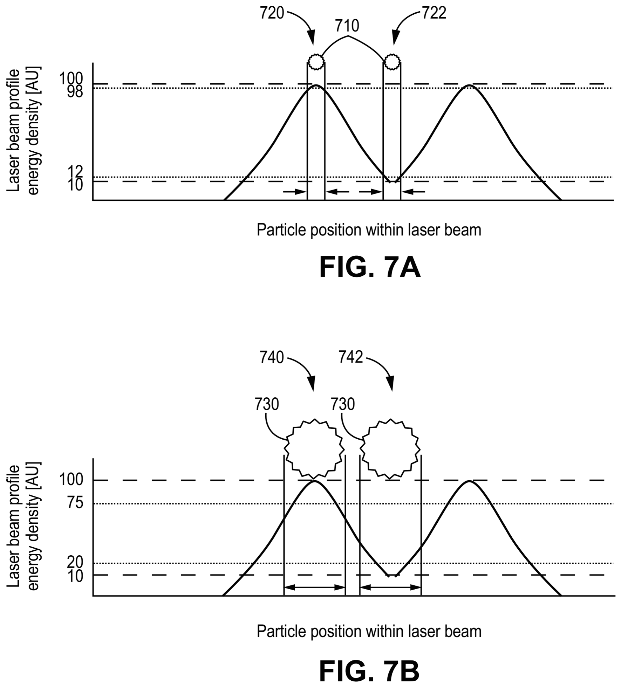

The present systems utilize a multi-line light beam profile to reduce the measurement error due to differences in aerosol particle optical responsivity. Examples of such a method is shown in Figures 7A and 7B. The examples utilize two light beams which have a 1/e² Gaussian width of 50 microns and the two light beams are separated by a distance of 50 microns. The Gaussian width value and the light beams separation value are specified only for explanation purposes; both values may differ in a real use-case.

In Figure 7A, an irregularly shaped aerosol particle 710 is within a laser beam, and measurement is performed at a first position 720. In a first orientation with respect to the sensor, the light beam average energy density in which the particle 710 is present is 98 [AU], the particle area is 100 µm² and the particle reflects 0.3% of the optical power in a direction to the sensor receiving optics. The measured amplitude of the optical response ("MAX") will be 98 * 100 * 0.003 = 29.4 [AU*µm²]. In a second orientation with respect to the sensor, the light beam average energy density in which the particle 710 is present is 98 [AU], the particle area is 100 µm² and the particle reflects 0.1% of the optical power in a direction to the sensor receiving optics. The measured amplitude of the optical response ("MAX") will be 98 * 100 * 0.001 = 9.8 [AU*µm²].

The particle optical response is measured at a second position 722 as well. In the first orientation with respect to the sensor, the light beam average energy density in which the particle 710 is present is 12 [AU], the particle area is 100 µm² and the particle reflects 0.3% of the optical power in a direction to the sensor receiving optics. The measured value of the optical response ("MIN") in this case will be 12 * 100 * 0.003 = 3.6 [AU*µm²]. In the second orientation with respect to the sensor, the light beam average energy density in which the particle is present is 12 [AU], the particle area is 100 µm² and the particle reflects 0.1% of the optical power in a direction to the sensor receiving optics. The measured value of the optical response ("MIN") will be 12 * 100 * 0.001 = 1.2 [AU*µm²].

In calculating a ratio of the particle optical response in the second and the first measurement positions for the first particle orientation, the result is 3.6 / 29.4 = 0.12. In calculating the ratio of the particle optical response in the second and the first measurement positions for the second particle orientation, the result is 1.2 / 9.8 = 0.12.

This example illustrates that the particle sizing based on ratio is less sensitive to differences in particle optical responsivity. In the following text, calculating a ratio between the second and the first optical response will be called a "MIN/MAX ratio."

In Figure 7B, an irregularly shaped aerosol particle 730, which is larger than the particle 710 in Figure 7A, is within a laser beam, and measurement is performed at a first position 740. In a first orientation with respect to the sensor, the light beam average energy density in which the particle is present is 75 [AU], the particle area is 1,600 µm² and the particle reflects 0.3% of the optical power in a direction to the sensor receiving optics. The measured amplitude of the optical response ("MAX") will be 75 * 1,600 * 0.003 = 360 [AU*µm²]. The particle optical response is measured at a second position 742 as well. In the first orientation with respect to the sensor, the light beam average energy density in which the particle is present is 20 [AU], the particle area is 1,600 µm² and the particle reflects 0.3% of the optical power in a direction to the sensor receiving optics. The measured amplitude of the optical response ("MIN") will be 20 * 1600 * 0.003 = 96 [AU*µm²]. In calculating a MIN/MAX ratio of particle optical response in the second and the first measurement positions, the result is 96 / 360 = 0.27. As the particle size increases, the particle collects energy from both optical beams and the MIN/MAX ratio will be increased.

For very small particles, the MIN/MAX ratio value is a small number. As the particle size increases, the MIN/MAX ratio value is increasing. The value of the MIN/MAX ratio can be between a value of 0.0 (smaller particles) and 1.0 (larger particles). The value of the MIN/MAX ratio is dependent on the size of the particle and a calibration Look-Up Table (LUT) can be created to estimate the particle size based on the identified value of the MIN/MAX ratio

If the optical response generated by the aerosol particle is in the first position, however the optical response in the second position is below the noise level, then the particle sizing algorithm will utilize a special calibration Look-Up Table, where optical signal response amplitude and the duration of signal below the noise level between the two peaks will be utilized to estimate the size of a particle. The duration of a signal below noise level must be corrected based on a value of airspeed.

The airspeed value can be provided by other aircraft systems or by measurement of duration between the two optical response signal peaks. Optical response signal duration can be measured as a number of optical signal digital samples. The number of digital samples is dependent on airspeed: the higher the airspeed, the lower the number of digital samples will be measured. Knowing the airspeed (provided by other vehicle systems to the particulate sensor), the particle optical response can be resampled (signal up sampling, signal down sampling, signal interpolation) and become independent of airspeed.

To make optical response independent of airspeed, a resampling method can be used. Suppose a sensor will support the following aircraft airspeed range: 50 to 300 meters per second (mps); and suppose a sensor digital sampling frequency is 50 MHz. For the 50 meters per second airspeed, particle position with respect to the vehicle will shift by 1 micron between two consequent digital samples (distance = 50 mps * 20 ns). For the 300 meters per second airspeed, particle position with respect to the vehicle position will shift by 6 microns between two consequent digital samples (distance = 300 mps * 20 ns). The sensor may use resampling methods (up sampling / down sampling / interpolation) to make particle optical response independent of airspeed. For example, if the 300 meters per second optical response is up sampled 6 times, it will provide an optical response with a number of digital samples equal to 50 meters per second optical response.

Alternatively, if the optical response peak shape does not need to be measured, optical response duration can be made independent of airspeed by multiplying a measured optical response peak duration by the following correction factor: $\frac{measured airspeed}{maximal airspeed}$. The advantage of this solution is lower computation and memory demands.

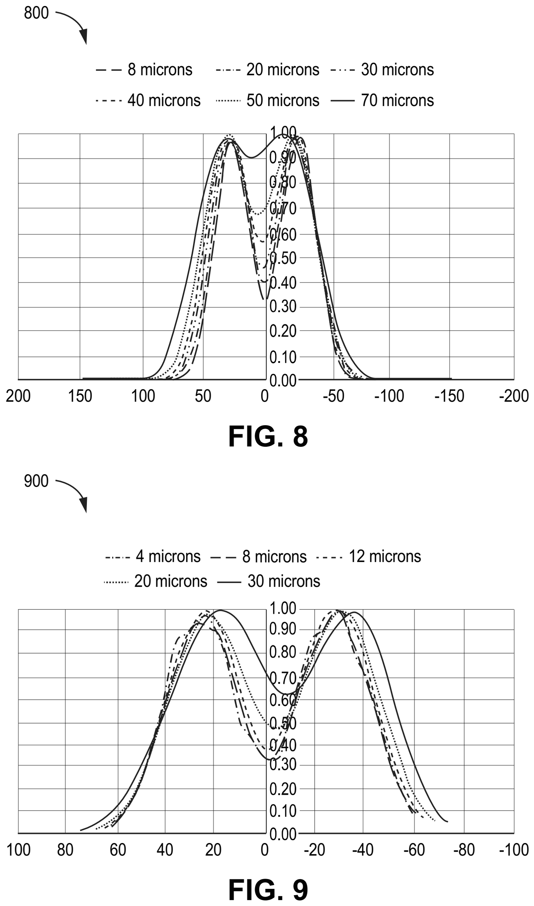

Figure 8 is a graph 800 illustrating a scenario where a light source generates two optical beams and each of the two beams has a 1/e² Gaussian width of 50 microns and the two beams are separated by a distance of 50 microns. The graph 800 shows the normalized optical response of ice crystals having a cubic shape vs. particle position with respect to the two beams. From the graph 800, it is visible that the MIN/MAX ratio is dependent on particle size. The optical analysis indicates that by analyzing the MIN/MAX ratio between the amplitude of optical response and minimum between two optical response peak centers, a particle size can be estimated. From the graph 800, it is also visible that as the particle gets larger, the peak of the optical response is not produced exactly at the light beam peak center, which has a horizontal coordinate of value 0.0, but in its vicinity.

Figure 9 is a graph 900 illustrating a scenario where a light source produces two light beams and each of the two light beams has 1/e² Gaussian width of 50 microns and the two light beams are separated by a distance of 50 microns. The graph 900 shows the normalized optical response of water droplet vs. particle position with respect to the two light beams. From the graph 900, it is visible that the MIN/MAX ratio is dependent on particle size. The optical analysis indicates that by analyzing the MIN/MAX ratio, a particle size can be estimated. From the graph 900, it is also visible that as the particle gets larger, the peak of the optical response is not produced exactly at the light beam peak center, but in its vicinity.

Although the present multi-line particle sizing method using ratio signal is able to reduce sensitivity to particle optical responsivity, the method has some defined measurement errors. A single aerosol particle of single size and shape may produce different values of MIN/MAX ratio, depending on orientation of the particle with respect to the sensor. The ratio signal also depends on particle shape, surface optical properties and material optical properties.

Measurement accuracy of the present multi-line particle sizing method using ratio signal can be improved if additional inputs are added to the particle size estimation algorithm. For example, the following parameters can be used with the MIN/MAX ratio value as well to estimate particle size with higher accuracy: identified particle type (water droplet, ice crystal, volcanic ash / sand / dust particle), optical response amplitude, peak duration, and other peak shape parameters, such as symmetry and slope. In addition, a relative position of each of the optical response peaks, a value of each optical response minimum between each of the peaks, and a relative position of each of the optical response minimums, can be used. Rule based systems, machine learning or other data processing techniques can also be used to improve the particle sizing accuracy.

Dependency of the MIN/MAX ratio signal and optical signal amplitude (MAX) may be analyzed to determine the particle asymmetry. Spherical particles have unique dependency of MIN/MAX ratio signal and optical amplitude signal (MAX), while higher variation in the MIN/MAX ratio and optical response amplitude (MAX) signal will be observed for asymmetrical particles. The particle asymmetry analysis can be used to determine additional information about possible particle shapes and the information can be used to correct particle size estimation.

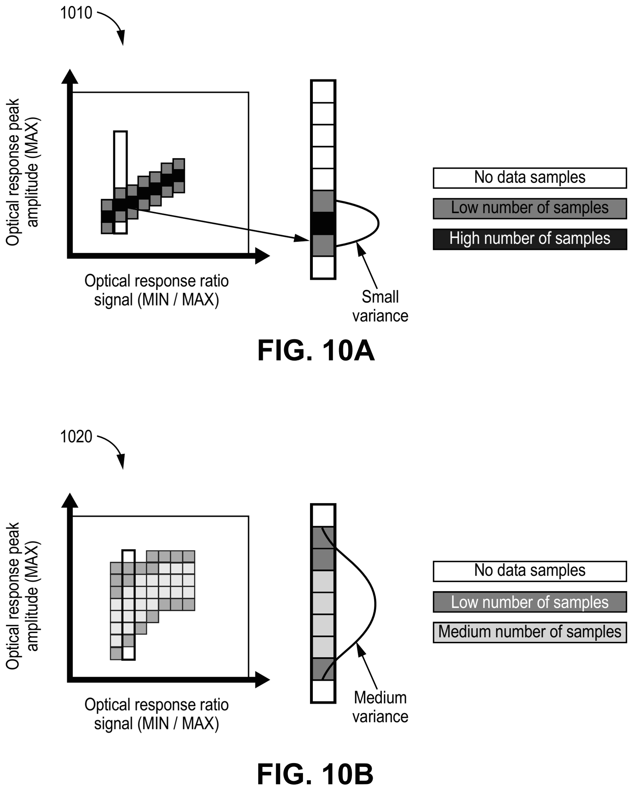

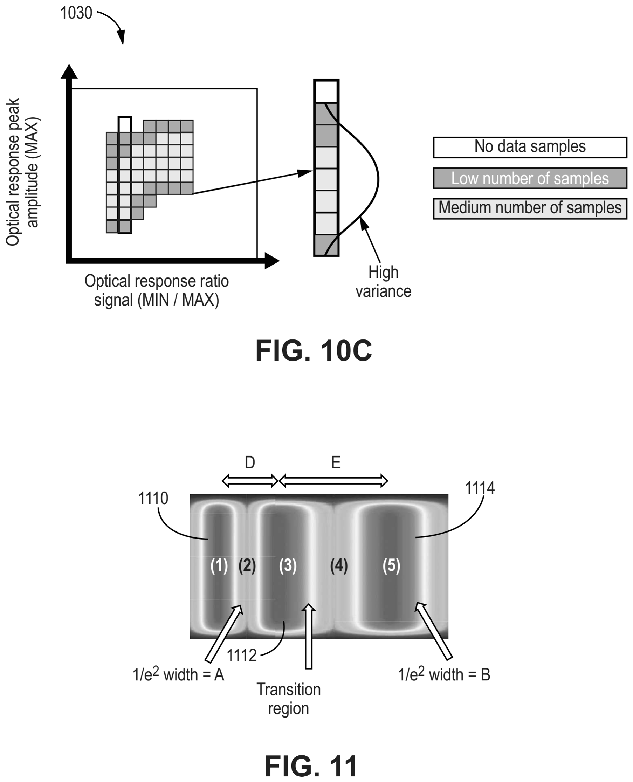

Figures 10A, 10B, and 10C illustrate two-dimensional histogram data distributions of MIN/MAX ratio and optical response peak amplitude (MAX) for a water droplet, an ice crystal cube of size 'A x A x A', and an ice crystal block of size 'A x A x 3A'. A first axis of the histogram describes the MIN/MAX ratio, and a second axis of the histogram describes the optical response peak amplitude (MAX). A variance of the optical response amplitude for each histogram column (bin) of the MIN/MAX ratio is also calculated.

Figure 10A illustrates a simulated data distribution 1010 for a water droplet. As the optical response is independent from its orientation with respect to the sensor and its shape is always spherical, the measured distribution will closely follow a single curve. There might be some variation due to sensor measurement error and noise. The variance is very small for water droplets.

Figure 10B illustrates a simulated data distribution 1020 of ice crystals having a cubical shape. If the variance is analyzed within each of the MIN/MAX ratio histogram bins, it is clearly visible that the optical response peak amplitude (MAX) variance is higher than for water droplets.

Figure 10C illustrates a simulated data distribution 1030 of ice crystals having a block shape. As the particle is highly asymmetrical, the variance within each of the MIN/MAX ratio histogram bins is higher than for ice crystals having cubical shape.

Therefore, the analysis of variance can be used to get additional information about particle asymmetry, which can be then used to enhance size estimation of ice crystal and volcanic ash / sand / dust particle particles. This approach requires statistical analysis; therefore, a sufficient amount of particle measurements needs to be performed to get reliable statistics.

Figure 11 illustrates how additional neighboring light beams can be added to the present system setup. A first light beam 1110 has a 1/e² width of A, a second light beam 1112 has a 1/e² width of A microns on its left area and a 1/e² width of B microns on its right area, and a third light beam 1114 has 1/e² width of B microns. The first and the second light beams are separated by a distance of D microns. The second and third light beams are separated by a distance of E microns. A first MIN/MAX ratio can be calculated from the optical response within positions (2) / (1). A second MIN/MAX ratio can be calculated from the optical response within positions (4) / (5). A first MIN/MAX ratio signal value is calculated from the 1/e² width, which is smaller than the 1/e² width from which the second MIN/MAX ratio is calculated. Therefore, the first MIN/MAX ratio can be used for size estimation of smaller particles, while the second MIN/MAX ratio can be used for size estimation of larger particles.

For the above-described scenario in Figure 11, the energy density profile between the first and the second light beams is created in a manner that is the same as if both of the light beams were made with parameters of the first light beam. The energy density between the second and the third light beams is created in a manner that is the same as if both of the light beams were made with parameters of the third light beam. However, since the energy density of the second light beam is not symmetrical and differs for its left and the right areas, the optical response amplitude generated in the vicinity of the center of second light beam produces a different amplitude compared to the first and the third light beams. Therefore, the amplitude of the two consecutive responses will differ and the MIN/MAX ratio will be valid only for the defined positions (2) and (1), (4) and (5).

### Example Simulations

The following example illustrates determining the size of particles with different optical responsivity using two beams. Note that an optical response of a water droplet is significantly larger than the optical response of an ash particle. When a water droplet and ash particle have the same size: the water droplet optical response within a Gaussian peak of one of the beams is for example 29.4 [AU*µm²]; the water droplet optical response between the Gaussian peaks of the beams is for example 3.6 [AU* µm²]; under same conditions the ash particle optical response within a Gaussian peak is 13.4 [AU* µm²]; and the ash particle optical response between the Gaussian peaks is 1.6 [AU* µm²]. Based on amplitude of the particle response, the size of both particles cannot be correctly identified. However, based on a MIN/MAX ratio of optical response within the Gaussian peak and optical response between the Gaussian peaks, the size of the particle can be correctly determined. In this example, the water droplet optical response ratio is 3.6 / 29.4 = 0.12, and the ash particle optical response ratio is 1.6/13.4 = 0.12. Thus, the present approach provides a reliable particle sizing method for different types of particles having the same size.

A sensor optical window transmissivity can be reduced due to insects, dirt, contamination by de-icing fluids, or the like. In some scenarios, sensors are installed on the nose of an aircraft (for high collection efficiency - boundary layer effect), but this is also prone to collect insects, dirt, etc. The optical power through a sensor optical window can be reduced by about 20 % due to dirt and insects present on the optical window.

The following example illustrates determining the size of particles through a dirty optical window using two beams. In this example, the water droplet clear window optical response within a Gaussian peak of one of the beams is 29.4; the water droplet clear window optical response between Gaussian peaks of the beams is 3.6; the water droplet dirty window optical response within a Gaussian peak is 29.4 * 0.8 = 23.5; and the water droplet dirty window optical response between Gaussian peaks is 3.6 * 0.8 = 2.9. Based on an amplitude of the particle response, a different particle size for clear and dirty widows is obtained for water droplets of the same size. However, based on a ratio of optical response within the Gaussian peak and optical response between Gaussian peaks, the particle size with clear and dirty optical windows can be correctly determined. In this example, the water droplet clear window optical response ratio is 3.6 / 29.4 = 0.12, and the water droplet dirty window optical response ratio is 2.9 / 23.5 = 0.12. Thus, the present measurement method is resistant to optical window contamination. For water droplets specifically, the amplitude and optical response ratio signal are deterministic, therefore any inconsistency between the data can be used to detect optical window contamination.

The following example shows how additional light beam(s) can be added to the present system setup. A first light beam (left) has a 1/e² width of 50 microns, a second light beam (middle) has a 1/e² width of 50 microns on its left area and a 1/e² width of 160 microns on its right area. A third light beam (right) has a 1/e² width of 160 microns. The first and the second light beam are separated by a distance of 50 microns. The second and third beam are separated by a distance of 160 microns. A first MIN/MAX ratio can be calculated from the optical response within positions (2) / (1), and a second MIN/MAX ratio can be calculated from the optical response within positions (4) / (5)*.* (See Fig. 11). As the first MIN/MAX ratio signal value is calculated from a 1/e² width of 50 microns, it can be more efficient for size estimation of smaller particles than the second MIN/MAX ratio signal value, which is calculated from light beams of 1/e² width of 160 microns.

### Present Multi-Line Measurement Method for Large Particles

Suppose a light beam has a Gaussian profile and an aerosol particle with the largest diameter is similar sized or larger than the light beam Gaussian width. For such a scenario, the particle size may be considered large compared to the width of the light beam and individual types of optical responses may cause the optical response not to be linearly dependent on the light beam energy density profile.

The present systems utilize a multi-line light beam profile to reduce the measurement error due to differences in aerosol particle optical responsivity. Examples of such an approach is shown in Figures 7A and 7B. In these examples, each of the two light beams has a 1/e² Gaussian width of 50 microns and the two light beams are separated by a distance of 50 microns. The Gaussian width value and the light beams separation value are specified only for explanation purposes, as both values may differ in a real use-case.

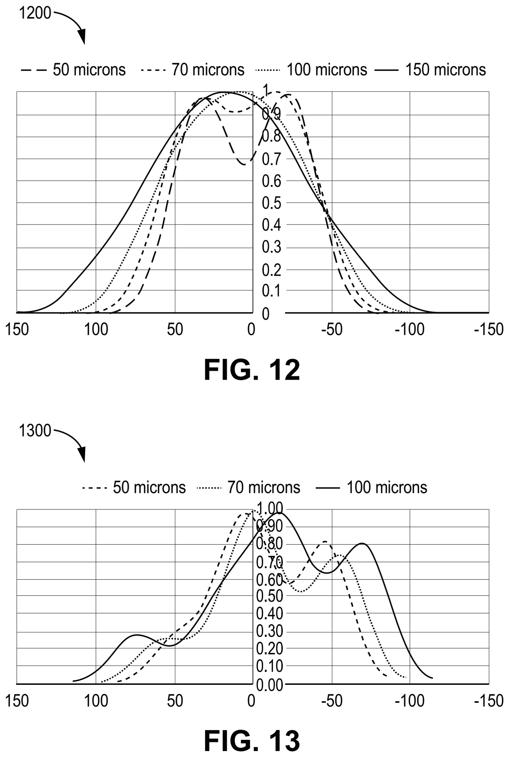

Figure 12 is a graph 1200 illustrating a scenario where a light source generates two light beams, where each of the two light beams has a 1/e² Gaussian width of 50 microns, and the two light beams are separated by a distance of 50 microns. Ice crystal cubes having an equivalent diameter of 50, 70, 100 and 150 microns, have the following side lengths: 40, 56, 80, and 120 microns; and the following body diagonals: 70, 97, 140, and 209 microns. For this example, a specific ice crystal cube orientation, which has only a single type of optical response, was selected. The optical response of such a particle is illustrated on the graph 1200. As the particle gets to a similar size as the distance between the two Gaussian peaks, its optical response is produced using both of the light beams when the particle is between the two Gaussian peaks. Therefore, the optical response is stronger in between the two light beams than in the center of each of the two light beams. The graph 1200 illustrates the optical response of the ice crystal cube, and it is clearly visible that only a single peak is produced by the particle as its equivalent diameter increases over 100 microns. If only a single peak is produced by the particle, only the optical response amplitude, optical response shape and optical response duration are used to determine the particle size.

Figure 13 is a graph 1300 illustrating a scenario where a light source generates two light beams, where each of the two light beams has a 1/e² Gaussian width of 50 microns and the two light beams are separated by a distance of 50 microns. Large particles having multiple types of optical response may produce a complex optical response, which needs to be analyzed by different approaches. Figure 13 illustrates the optical response of a water droplet having a diameter from 50 to 100 microns. As the water droplet diameter grows, the optical response types are being separated, and the sensor measured optical response differs from the light beam energy density profile. As water droplets always have spherical shape, each produced optical response shape can be matched with a reference water droplet of certain diameter, stored in a database such as database 142 (Fig. 1). Therefore, to determine the water droplet diameter, similarity between measured and reference optical signals needs to be found. In this case, pattern matching methods can be used, or comparison of optical response parameters can be used. For example, the following parameters can be used: number of peaks within the optical response, amplitude ratio of each peak, optical response duration, shape of the optical response, etc.

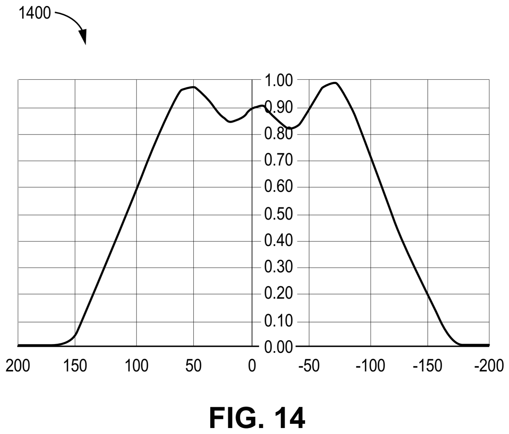

Ice crystals and volcanic ash / sand / dust particles have multiple types of optical responses and compared to water droplets, the intensity of individual responses varies with dependency on particle size, shape, orientation, surface optical properties and material optical properties. Therefore, the optical responses caused by ice crystals and ash / sand / dust particles will produce multiple different optical response shapes. This is illustrated in Figure 14 by a graph 1400. This example scenario is for a hexagonal cross ice crystal of equivalent diameter of 125 microns passing through two light beams, which have a 1/e² Gaussian width of 50 microns and the two light beams are separated by a distance of 50 microns. It is clearly visible that the number of optical response peaks is three, therefore the MIN/MAX ratio method cannot be used, and complex signal analysis will need to be performed.

### High-Level Algorithm

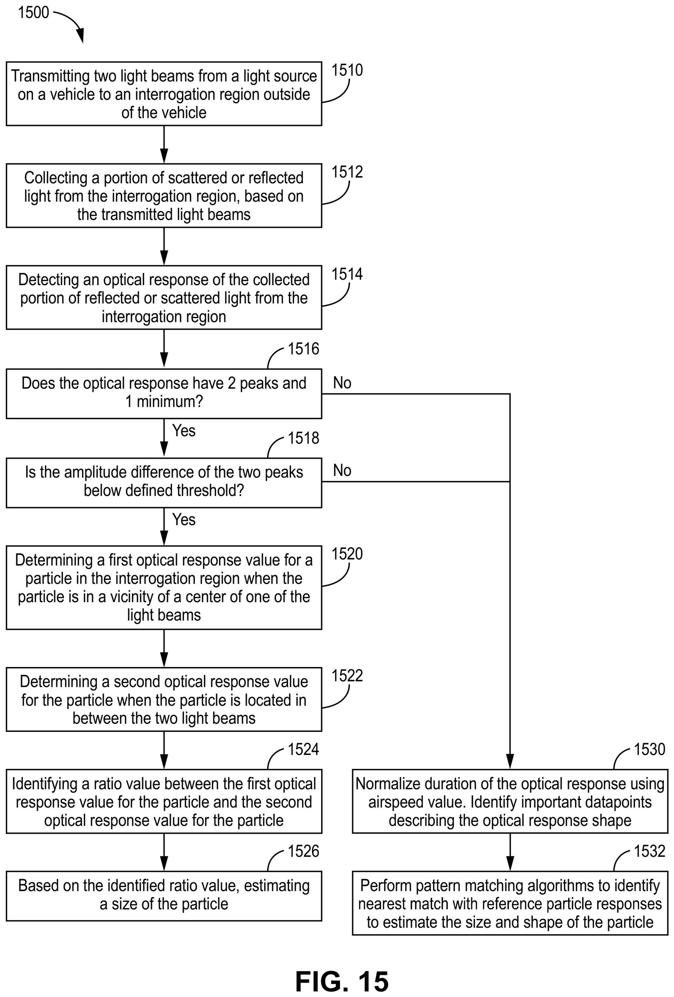

Figure 15 is a flow diagram of a method 1500 for particle sizing, according to one implementation. The method 1500 can be implemented, for example, by particle sizing algorithm 132 in system 100 (Fig. 1). The method 1500 comprises transmitting two light beams from a light source on a vehicle, to an interrogation region outside of the vehicle (block 1510); collecting a portion of scattered or reflected light from the interrogation region, based on the transmitted light beams (block 1512); and detecting an optical response of the collected portion of reflected or scattered light from the interrogation region (block 1514).

The optical response peak shape is analyzed, and specifically, a data processing algorithm identifies if the optical response has two peaks and a single minimum (block 1516), and if the amplitude of the two peaks does not differ more than a defined threshold (block 1518). The maximal absolute difference can be for example 20%. If the answer to both of the previous statements in blocks 1516 and 1518 is true (yes), then the algorithm identifies particle size to be small compared to the 1/e² width of the light beam, and method 1500 will next execute block 1520 (described below). If either of the previous statements in blocks 1516 and 1518 is false (no), the algorithm identifies particle size to be similar to or larger than the 1/e² width of the light beam, and method 1500 will next execute block 1530 (described below).

When the determination is made that the particle size is smaller than the 1/e² light beam width, method 1500 further includes determining a first optical response value for a particle in the interrogation region when the particle is located in a vicinity of a center of one of the light beams (block 1520); determining a second optical response value for the particle when the particle is located in between the two light beams (block 1522); identifying a ratio value between the first optical response value for the particle and the second optical response value for the particle (block 1524); and based on the identified ratio value, estimating a size of the particle (block 1526).

When the determination is made that the particle size is similar to or larger than 1/e² width of the light beam, method 1500 further includes correcting the optical response duration using the value of airspeed, and calculating peak shape parameters (block 1530). This allows for comparison of the measured peak shape with the reference water droplet, ice crystal and volcanic ash / sand / dust particles stored in a database, and using pattern matching algorithms, a nearest match is used to estimate the particle size (block 1532).

Data generated by the block 1526: MIN/MAX ratio and estimated particle size can be used as an input to a computer model, where other parameters can be analyzed as well, such as identified particle type, peak amplitude signal and airspeed corrected optical response duration. The computer model (including an expert system, a probabilistic model, or a machine learning system) is operative to determine a most probable particle size.

Data generated by the blocks 1530 and 1532: identified reference optical response match, estimated particle size and parameters describing optical response peak shape can be used as an input to a computer model, where other parameters can be analyzed as well, such as identified particle type, peak amplitude signal and airspeed corrected optical response duration. The computer model (including an expert system, a probabilistic model, or a machine learning system) is operative to determine a most probable particle size.

### Multi-line Laser Generation

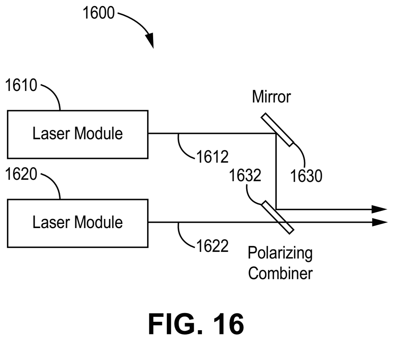

There are various ways to create a laser beam profile having at least two beams, in which at least two Gaussian beam profiles are next to each other. For example, Figure 16 illustrates a system 1600 for creating a two-line laser beam profile that uses polarization beam combining of light beams. The system 1600 includes a first laser module 1610 configured to emit a first beam 1612 that is horizontally polarized, and a second laser module 1620 configured to emit a second beam 1622 that is vertically polarized. The system 1600 also includes a mirror 1630 and a polarizing combiner 1632.

During operation, first laser module 1610 transmits first beam 1612 to mirror 1630, which reflects first beam 1612 to polarizing combiner 1632, and second laser module 1620 transmits second beam 1622 to polarizing combiner 1632. The polarizing combiner 1632 reflects first beam 1612 toward a sampling volume, and transmits second beam 1622 toward the sampling volume. An output beam profile of polarizing combiner 1632 contains a two-line laser beam profile.

A multi-line laser beam profile can be created by other mechanisms as well, for example by use of diffractive and refractive optics.

In a further alternative embodiment, a laser beam profile having multiple beams can be created using a dedicated beam shaper to form various laser beam patterns, such as a periodic pattern or complex pattern to provide for extended particle size range detection.

In another alternative embodiment, a light beam profile having multiple beams can be created using a light emitting diode (LED), with dedicated focusing optics, which can avoid the distorting influence of light interference and speckle in measurement volume and in sensor optics.

The processing units and/or other computational devices used in the system and method described herein may be implemented using software, firmware, hardware, or appropriate combinations thereof. The processing units and/or other computational devices may be supplemented by, or incorporated in, specially designed application-specific integrated circuits (ASICs) or field programmable gate arrays (FPGAs). In some implementations, the processing units and/or other computational devices may communicate through a transceiver with other computing devices outside of the navigation system, such as those associated with a management system, or computing devices associated with other subsystems controlled by the management system. The processing units and/or other computational devices can also include or function with software programs, firmware, or other computer readable instructions for carrying out various process tasks, calculations, and control functions used in the methods and systems described herein.

The methods described herein may be implemented by computer executable instructions, such as program modules or components, which are executed by at least one processor or processing unit. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer readable instructions. These instructions are typically stored on appropriate computer program products that include computer or processor readable media used for storage of computer readable instructions or data structures. Such a computer readable medium may be available media that can be accessed by a general purpose or special purpose computer or processor, or any programmable logic device.

Suitable computer or processor readable storage media may include, for example, non-volatile memory devices including semi-conductor memory devices such as Random Access Memory (RAM), Read Only Memory (ROM), Electrically Erasable Programmable ROM (EEPROM), or flash memory devices; magnetic disks such as internal hard disks or removable disks; optical storage devices such as compact discs (CDs), digital versatile discs (DVDs), Blu-ray discs; or any other media that can be used to carry or store desired program code in the form of computer executable instructions or data structures.

### Example Embodiments

Example 1 includes a system comprising: a particulate sensor unit for a vehicle, the particulate sensor unit comprising: at least one light source configured to direct at least two light beams to an interrogation region outside of the vehicle and where portions of the light beams overlap each other; an optical detector configured to capture scattered or reflected light from an aerosol particle in the interrogation region that passes through the at least two light beams; and a processor in operative communication with the optical detector; wherein the processor hosts a program module with instructions, executable by the processor, to perform a particle sizing method for aerosol particles in the interrogation region, the method comprising: detecting an optical response of scattered or reflected light from the interrogation region; wherein when the detected optical response has two peaks, the method comprises: determining a first optical response value for a particle when located in a vicinity of a center of one of the light beams; determining a second optical response value for the particle when located in between the light beams; identifying a ratio value between the first optical response value for the particle and the second optical response value for the particle; and based on the identified ratio value, estimating a size of the particle.

Example 2 includes the system of Example 1, wherein when the detected optical response has two peaks, the particle size estimation is performed using a calibration look-up table.

Example 3 includes the system of any of Examples 1-2, wherein each of the light beams has a flat-top profile in one axis and Gaussian profile in a perpendicular axis.

Example 4 includes the system of any of Examples 1-3, wherein the at least two light beams create a multi-line laser pattern, where each line is parallel to each other line.

Example 5 includes the system of any of Examples 1-4, wherein an airspeed in the interrogation region is calculated from a particle transition time between two light beams.

Example 6 includes the system of any of Examples 1-5, wherein: a two-dimensional histogram is generated, where a first axis of the histogram describes an optical response ratio signal (MIN/MAX ratio), wherein MIN is an optical response minimum between two amplitude peaks, and MAX is an optical response peak amplitude; and a second axis of the histogram describes the optical response peak amplitude; and a variance of the optical response peak amplitude for each histogram column of the MIN/MAX ratio is calculated.

Example 7 includes the system of Example 6, wherein: the variance of each histogram column is compared with reference variance values for water droplets, multiple shapes of ice crystals, or multiple shapes of volcanic ash / sand / dust particles; and based on a difference of measured variance and expected variance for each particle type, the system generates a probability for each type of particle and its shape and determines a most probable type of particle and its shape.

Example 8 includes the system of Example 7, wherein the processor uses the MIN/MAX ratio and additional signal parameters as an input into a computer model including an expert system, a probabilistic model, or a machine learning system; wherein the additional signal parameters comprise the optical response amplitude, corrected optical response duration, optical response symmetry, estimated particle type, or estimated particle shape; wherein the computer model is operative to determine a most probable particle type.

Example 9 includes the system of any of Examples 1-8, wherein when the detected optical response has a different number of peaks than two, or an amplitude difference of the two peaks differs more than a defined threshold, a particle size analysis method is executed, comprising: correcting a duration of the optical response peak based on an airspeed of the vehicle; performing an optical response signal analysis, where an amount of scattered or reflected light from a particle is analyzed in time; and determining a size of the particle based on comparison of optical response signal parameters with reference optical responses stored in a sensor database.

Example 10 includes the system of Example 9, wherein the optical response signal parameters are calculated and include: a corrected duration of the optical response; an amplitude of each of the optical response peaks; a relative position of each of the optical response peaks; a value of each minimum between each of the amplitudes; a relative position of each of the optical response minimums; a symmetry of the optical response; or a slope of the optical response.

Example 11 includes the system of Example 10, wherein the optical response signal parameters are compared with the reference optical responses stored in the sensor database, by using expert system or machine learning algorithms to determine the size of the particle.

Example 12 includes the system of any of Examples 1-11, wherein when more than two light beams are emitted by the at least one light source, light beam profiles have different widths, and the light beams may not be symmetrical in an airflow direction; and particle size is estimated from a signal ratio between maximum and minimum for each two neighboring light beams; wherein: a first particle size range of particles is estimated using a first calibration look-up table and a first MIN/MAX ratio value calculated as the particle is passing between a first light beam and a second light beam; and a second particle size range of particles is estimated using a second calibration look-up table and a second MIN/MAX ratio value calculated as the particle is passing between the second light beam and a third light beam.

Example 13 includes the system of any of Examples 1-12, wherein the vehicle is an aircraft.

Example 14 includes a method comprising: transmitting a plurality of light beams from a light source on a vehicle, to an interrogation region outside of the vehicle; collecting a portion of scattered or reflected light from the interrogation region, based on the transmitted light beams; detecting an optical response of the collected portion of scattered or reflected light from the interrogation region to determine whether the detected optical response has at least two peaks; when the detected optical response has at least two peaks, determining a first maximum optical response value for a particle in the interrogation region; determining a first minimum optical response value for the particle; identifying a ratio value between the first maximum optical response value for the particle and the first minimum optical response value for the particle; and based on the identified ratio value, estimating a size of the particle.

Example 15 includes the method of Example 14, wherein when the detected optical response has two peaks, the particle size estimation is performed using a calibration look-up table.

Example 16 includes the method of any of Examples 14-15, further comprising: generating a two-dimensional histogram having a first axis for an optical response ratio signal (MIN/MAX ratio), and a second axis for an optical response peak amplitude, where MIN is the optical response minimum between two amplitude peaks, and MAX is the optical response peak amplitude; and calculating a variance of the optical response peak amplitude for each column in the histogram of the MIN/MAX ratio.

Example 17 includes the method of Example 16, further comprising: comparing the variance of each histogram column with reference variance values for water droplets, multiple shapes of ice crystals, or multiple shapes of volcanic ash / sand / dust particles; and based on a difference of measured variance and expected variance for each particle type, generating a probability for each type of particle and its shape, and determining a most probable type of particle and its shape.

Example 18 includes the method of any of Examples 14-17, wherein the particle comprises a water droplet, an ice crystal, volcanic ash, sand, or dust.

Example 19 includes the method of any of Examples 14-18, wherein the vehicle is an aircraft.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A system comprising:
a particulate sensor unit for a vehicle, the particulate sensor unit comprising:
at least one light source configured to direct at least two light beams to an interrogation region outside of the vehicle and where portions of the light beams overlap each other;
an optical detector configured to capture scattered or reflected light from an aerosol particle in the interrogation region that passes through the at least two light beams; and
a processor in operative communication with the optical detector;
wherein the processor hosts a program module with instructions, executable by the processor, to perform a particle sizing method for aerosol particles in the interrogation region, the method comprising:
detecting an optical response of scattered or reflected light from the interrogation region;
wherein when the detected optical response has two peaks, the method comprises:
determining a first optical response value for a particle when located in a vicinity of a center of one of the light beams;
determining a second optical response value for the particle when located in between the two light beams;
identifying a ratio value between the first optical response value for the particle and the second optical response value for the particle; and
based on the identified ratio value, estimating a size of the particle.

2. The system of claim 1, wherein when the detected optical response has two peaks, the particle size estimation is performed using a calibration look-up table.

3. The system of claim 1, wherein:
a two-dimensional histogram is generated, where a first axis of the histogram describes an optical response ratio signal (MIN/MAX ratio), wherein MIN is an optical response minimum between two amplitude peaks, and MAX is an optical response peak amplitude; and a second axis of the histogram describes the optical response peak amplitude; and
a variance of the optical response peak amplitude for each histogram column of the MIN/MAX ratio is calculated.

4. The system of claim 3, wherein:
the variance of each histogram column is compared with reference variance values for water droplets, multiple shapes of ice crystals, or multiple shapes of volcanic ash / sand / dust particles; and
based on a difference of measured variance and expected variance for each particle type, the system generates a probability for each type of particle and its shape and determines a most probable type of particle and its shape.

5. The system of claim 4, wherein the processor uses the MIN/MAX ratio and additional signal parameters as an input into a computer model including an expert system, a probabilistic model, or a machine learning system;
wherein the additional signal parameters comprise the optical response amplitude, corrected optical response duration, optical response symmetry, estimated particle type, or estimated particle shape;
wherein the computer model is operative to determine a most probable particle type.

6. The system of claim 1, wherein when the detected optical response has a different number of peaks than two, or an amplitude difference of the two peaks differs more than a defined threshold, a particle size analysis method is executed, comprising:
correcting a duration of the optical response peak based on an airspeed of the vehicle;
performing an optical response signal analysis, where an amount of scattered or reflected light from a particle is analyzed in time; and
determining a size of the particle based on comparison of optical response signal parameters with reference optical responses stored in a sensor database.

7. The system of claim 6, wherein the optical response signal parameters are calculated and include:
a corrected duration of the optical response;
an amplitude of each of the optical response peaks;
a relative position of each of the optical response peaks;
a value of each minimum between each of the amplitudes;
a relative position of each of the optical response minimums;
a symmetry of the optical response; or
a slope of the optical response.

8. The system of claim 7, wherein the optical response signal parameters are compared with the reference optical responses stored in the sensor database, by using expert system or machine learning algorithms to determine the size of the particle.

9. The system of claim 1, wherein when more than two light beams are emitted by the at least one light source, light beam profiles have different widths, and the light beams may not be symmetrical in an airflow direction; and
particle size is estimated from a signal ratio between maximum and minimum for each two neighboring light beams;
wherein:
a first particle size range of particles is estimated using a first calibration look-up table and a first MIN/MAX ratio value calculated as the particle is passing between a first light beam and a second light beam; and
a second particle size range of particles is estimated using a second calibration look-up table and a second MIN/MAX ratio value calculated as the particle is passing between the second light beam and a third light beam.

10. A method comprising:
transmitting a plurality of light beams from a light source on a vehicle, to an interrogation region outside of the vehicle;
collecting a portion of scattered or reflected light from the interrogation region, based on the transmitted light beams;
detecting an optical response of the collected portion of scattered or reflected light from the interrogation region to determine whether the detected optical response has at least two peaks;
when the detected optical response has at least two peaks, determining a first maximum optical response value for a particle in the interrogation region;
determining a first minimum optical response value for the particle;
identifying a ratio value between the first maximum optical response value for the particle and the first minimum optical response value for the particle; and
based on the identified ratio value, estimating a size of the particle.
